# EUROPÄISCHE PATENTSCHRIFT

(11) **EP 1 678 091 B1**
(45) Veröffentlichungstag und Bekanntmachung des Hinweises auf die Patenterteilung: **28.09.2011**
(21) Anmeldenummer: 04790904.9
(22) Anmeldetag: 27.10.2004
(51) Int. Cl.: C03B 23/025, C03B 23/023

(54) **VERFAHREN ZUM HERSTELLEN EINES GLASFORMTEILES MIT MINDESTENS EINEM ABGEWINKELTEN SCHENKEL**
METHOD FOR THE PRODUCTION OF A MOLDED GLASS PART COMPRISING AT LEAST ONE BENT PORTION
PROCEDE POUR PRODUIRE UNE PIECE MOULEE EN VERRE COMPRENANT AU MOINS UNE PARTIE PLIEE

(30) Priorität: 28.10.2003 DE 10350189
(43) Veröffentlichungstag der Anmeldung: 12.07.2006
(73) Patentinhaber: Schott AG, 55122 Mainz (DE)
(72) Erfinder: LEISS, Hans-Hermann, 97877 Wertheim/Höhenfeld (DE); BELOW, Detlef, 97877 Wertheim (DE); NASS, Peter, 55120 Mainz (DE); HAUSTEIN, Holger, 07768 Orlamünde (DE); SCHWARZ, Erhard, 07743 Jena (DE); SCHOBER, Patrik, 55129 Mainz-Ebersheim (DE)
(74) Vertreter: Fuchs
(86) Internationale Anmeldenummer: PCT/EP2004/012127
(87) Internationale Veröffentlichungsnummer: WO 2005/042420

(56) Entgegenhaltungen:
- US-A- 2 348 179
- US-A- 3 136 619
- US-A- 4 081 263
- US-A- 4 173 461
- US-A- 5 322 539
- US-A1- 2002 020 192
- PATENT ABSTRACTS OF JAPAN Bd. 2000, Nr. 02, 29. Februar 2000 (2000-02-29) -& JP 11 322353 A (NIPPON SILICA GLASS CO LTD), 24. November 1999 (1999-11-24)
- PATENT ABSTRACTS OF JAPAN Bd. 012, Nr. 223 (C-507), 24. Juni 1988 (1988-06-24) -& JP 63 021229 A (NIPPON KIDEN KOGYO KK), 28. Januar 1988 (1988-01-28)

## Beschreibung

Die Erfindung bezieht sich auf ein Verfahren zum Herstellen einer Haushalts-Gargerätetür mit mehreckiger plattenförmiger und optional zumindest teilweise ausgebauchter Grundfläche und mindestens einem entlang einer Kante der Grundfläche abgewinkelten, den Raum zur Frontscheibe der Haushalts-Gargerätetür überbrückenden Schenkel.

Haushalts-Gargeräte, insbesondere Garöfen, besitzen bestimmungsgemäß einen Garraum mit einer Beschickungsöffnung, die durch eine Tür mit einem Sichtfenster verschließbar ist. Ein typisches Haushaltsgerät ist dabei der Backofen mit der Ofenmuffel als Garraum, der heutzutage bereits in beachtlichem Umfang mit einer pyrolytischen Selbstreinigung ausgestattet ist, durch die Garrückstände bei Pyrolysetemperaturen von ca. 480° C zu Asche zersetzt werden.

Durch die relativ hohen Temperaturen im Garraum der Haushalts-Gargeräte erhitzt sich auch die Gargerätetür und damit das Sichtfenster, das typischerweise aus einem Glasscheibenpaket mit mindestens zwei Glasscheiben, die durch Dichtungen getrennt sind, besteht, entsprechend. Dies gilt im besonderen Maße für die bei der Pyrolyse auftretenden extrem hohen Temperaturen in Pyrolyse-Backöfen. Wegen dieser Temperaturbelastungen werden daher bei Sichtfenstern für Gargeräte, insbesondere für Backöfen mit pyrolytischer Selbstverbrennung, hochwertigere Gläser für die Türscheiben eingesetzt, insbesondere für die der Ofenmuffel am nächsten liegende Innenscheibe.

So zeigt die DE 196 38 241 A1 eine Gargerätetür für einen Backofen mit pyrolytischer Selbstreinigung, die ein Glasscheibenpaket aufweist, welches an der zur Ofenmuffel weisenden Seite eine ebene Sichtscheibe (Innenscheibe) mit einem geringen Wärmeausdehnungskoeffizienten, z.B. aus Glaskeramik, aufweist. Diese ebene Innenscheibe überdeckt die Beschickungsöffnung des Backofens vollständig und bildet eine Kontaktfläche zu einem Anlageflansch bzw. erstreckt sich über eine Dichtung zwischen den Glasscheiben des Paketes hinaus. Derartige Scheiben werden als Vollflächenscheiben bezeichnet.

Die DE 100 50 609 A1 beschreibt eine Gargerätetür, die ein Glasscheibenpaket aufweist, dessen Innenscheibe, die aus Borosilikatglas oder Glaskeramik bestehen kann, ebenfalls die Beschickungsöffnung des Garraumes vollständig überdeckt und eine Kontaktfläche zu einem Anlageflansch bildet bzw. sich über eine Dichtung hinaus erstreckt. Die Innenscheibe ist jedoch nicht durchgehend eben, sondern weist eine zum Garraum hin weisende Ausformung auf, um Spannungszustände infolge des Temperaturgradienten zu kompensieren. Derartige Innenscheiben mit Ausformungen werden im folgenden als "Bauchscheiben" bezeichnet.

Wie beispielsweise die DE 101 43 925 A1 zeigt, ist bei einem derartigen Mehrscheibenpaket der äußere zwischen der Frontscheibe und der Innenscheibe befindliche Raum typischerweise umlaufend mit einem emaillierten, einteiligen und rahmenartig ausgebildeten Blechformteil abgedeckt. Es hat sich gezeigt, dass das Reinigungsverhalten in diesem Bereich nicht optimal ist.

Durch die DE 101 05 543 A1 ist eine mehrscheibig aufgebaute Gargerätetür mit einer Vollflächen-Innenscheibe bekannt geworden, bei welcher der Bereich zwischen der Front- und der Innenscheibe so ausgebildet ist, dass das Reinigungsverhalten in diesem Bereich optimiert ist. Bei dieser bekannten Gargerätetür, ist die Innenscheibe umlaufend, den Abstand zur Frontscheibe hin überbrückend, um einen vorgegebenen Winkel wannenförmig abgekantet. Durch diese Abkantung der Innenscheibe kann das ansonsten zwischen der Frontscheibe der Gargerätetür und der Innenscheibe befindliche, zur Abdeckung des Zwischenraumes dienende, umlaufende emaillierte Innenblech mit Vorteil entfallen, was die Reinigungsfreundlichkeit erhöht.

Die Erfindung wendet sich an die Herstellung eines solchen Glasformteiles mit mindestens einem abgewinkelten Schenkel.

Die vorgenannte Schrift 101 05 543 A1 mit dem wannenförmig abgekanteten Glasformteil macht hierzu keine konkreten Angaben. Dieses Glasformteil soll aus "Formglas" bestehen, was darauf hindeutet, dass es einstückig geformt, also gepresst ist. Auch die zeichnerische Darstellung deutet darauf hin. Die Herstellung des abgewinkelten Glasformteiles als Pressling erfordert jedoch teure Formen für jeden Formteiltyp und macht es zudem notwendig, mit schmelzflüssigem Glas zu arbeiten, mit all den zugehörigen, notwendigen Prozesskomponenten (Speiser etc.).

Aus der US 5, 322, 539 ist ein Verfahren zum Herstellen eines Glasformteiles mit mehreckiger, plattenförmiger und optional zumindest teilweise ausgebauchter Grundfläche und mindestens einem entlang einer Kante der Grundfläche abgewinkelten Schenkel bekannt mit den Schritten:
- Bereitstellen einer mehreckigen ebenen, optional zumindest teilweise ausgebauchten Glasscheibe aus Quarzglas
- Erhitzen der Kante auf mindestens einer Seite der Quarzglasscheibe mit einem Linienbrenner bis zum Erweichungspunkt des Quarzglases
- Abbiegen des über die niedrig viskose Kante hinausstehenden Glasrandes entlang der Biegekante als Schenkel des Glasformteiles bis zu einem vorgegebenen Winkel und
- Kühlen des Glasformteiles.

Das Glasformteil gemäß der vorstehenden Druckschrift ist eine Wanne aus Quarzglas, wie sie typischerweise im Rahmen der Herstellung von Computerchips zum Waschen der Chips benötigt wird. Quarzglas hat jedoch einen relativ hohen Schmelzpunkt (> 1800 °C) und ist schmelzund biegetechnisch nur sehr schwer zu bearbeiten, unter anderem wegen der starken Neigung zur Kristallisation. Daher müssen auch die offenen Kanten der aneinander stoßenden, abgewinkelten Randabschnitte der Wanne aus Quarzglas mit einem Glaslot verfüllt werden.

Der Erfindung liegt die Aufgabe zugrunde, das eingangs bezeichnete Verfahren so zu führen, dass das Abwinkeln des Schenkels entlang der jeweiligen Kante der Grundfläche mit einfachen Maßnahmen und Mitteln und dennoch mit der notwendigen Genauigkeit erfolgt.

Die Lösung dieser Aufgabe gelingt bei einem Verfahren zum Herstellen einer Haushalts-Gargerätetür mit mehreckiger plattenförmiger und optional zumindest teilweise ausgebauchter, Grundfläche und mindestens einem entlang einer Kante der Grundfläche abgewinkelten, den Raum zur Frontscheibe der Haushalts-Gargerätetür überbrückenden Schenkel, gemäß der Erfindung mit den Schritten:
- Bereitstellen einer mehreckigen ebenen, optional zumindest teilweise ausgebauchten, Glasscheibe aus Borosilikatglas
- Erhitzen der Kante auf mindestens einer Seite der Borosilikat-Glasscheibe mit einem Linienbrenner bis zum Erweichungspunkt des Glases
- Abbiegen des über die niedrig viskose Kante hinausstehenden Glasrandes entlang der Biegekante als Schenkel der Innenscheibe bis zu einem vorgegebenen Winkel
- Kühlen der Innenscheibe.

Durch die erfindungsgemäßen Maßnahmen, das gezielte lokale, linienhafte Erwärmen einer auf die Abmessungen der herzustellenden Innenscheibe abgestellten Glasscheibe entlang der Biegekante, ist mit großem Vorteil eine einfache, wenig aufwendige Herstellung von Innenscheiben mit mindestens einem abgewinkelten Schenkel möglich. Insbesondere können die eingangs erläuterten Vollflächen- und Bauchscheiben für Haushalts-Türsysteme auf einfache Weise hergestellt werden. Das Abbiegen entlang der Biegekante kann dabei durch das gezielte linienhafte Erwärmen der Kante mit der notwendigen Genauigkeit erfolgen.

Ausgestaltungen sowie Weiterbildungen der Erfindung sind in Unteransprüchen gekennzeichnet sowie ergeben sich anhand der Figurenbeschreibung.

Anhand von in den Zeichnungen beschriebenen Ausführungsbeispielen wird die Erfindung näher beschrieben:

Es zeigen:
- Fig. 1: in vier Figurenteilen A - D das Abbiegen eines Schenkels entlang einer Kante einer rechteckigen, ebenen Glasscheibe mit einem oszillierenden Linienbrenner und einem Biegewerkzeug zu einem L-förmigen Glasformteil,
- Fig. 2: in einer isometrischen Darstellung ein U-förmiges Glasformteil, bei dem ausgehend von dem Glasformteil nach Fig. 1 zusätzlich der gegenüberliegende Schenkel abgebogen ist,
- Fig. 3: in vier Figurenteilen A - D die Herstellung eines drei- sowie vierseitig abgekanteten Glasformteiles mit rechteckiger Grundfläche unter Darstellung des Herausschneidens von Eckenabschnitten direkt benachbarter abzukantender Abschnitte der Glasscheibe, und
- Fig. 4: in einer schematischen Längsschnitt-Darstellung die Anwendung eines erfindungsgemäß U-förmig abgekanteten Glasformteiles nach Fig. 2 als Innenscheibe einer Backofentür.

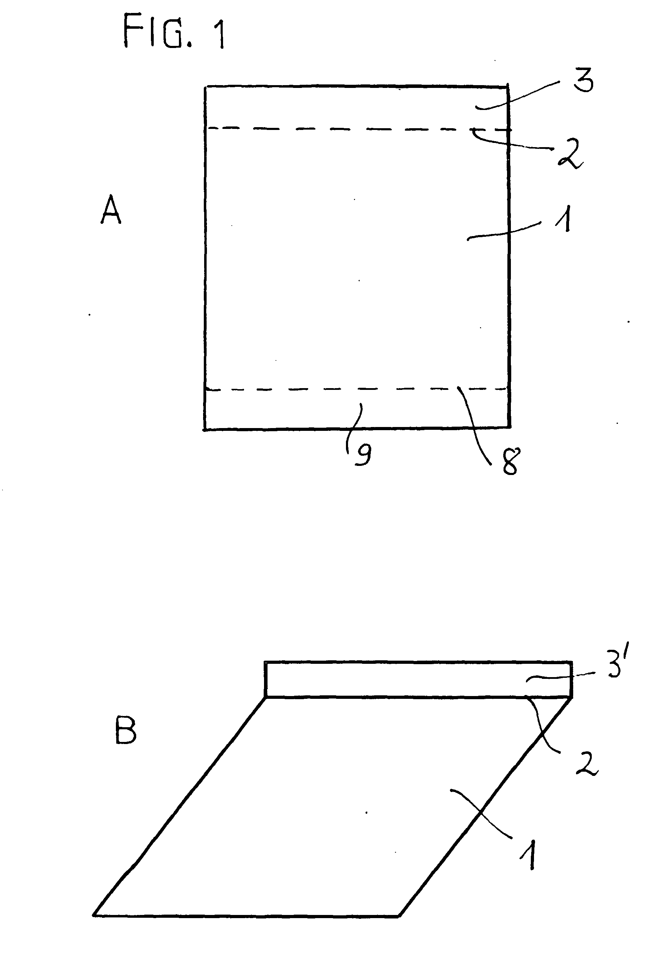

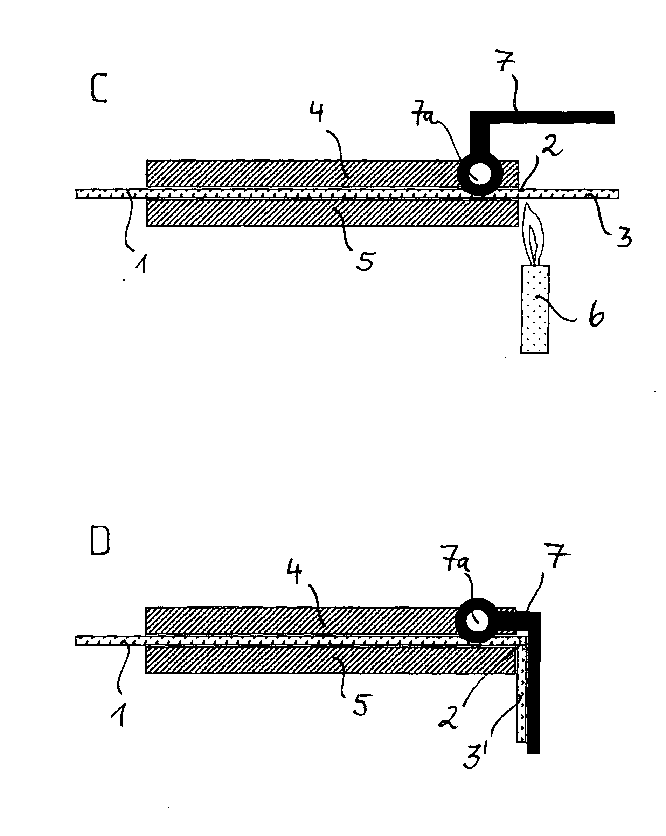

Die Fig. 1 zeigt im Figurenteil A eine ebene, d. h. flache oder plane rechteckige Glasscheibe 1, von der entlang einer vorgegebenen Kante 2, der Biegekante, ein Randabschnitt 3 als Schenkel 3' des späteren Glasformteiles (Figurenteil B) abgewinkelt werden soll. Dazu wird, wie im Figurenteil C symbolisch dargestellt, die Glasscheibe1 zwischen zwei plattenförmigen Aufnahmen 4, 5 eines Spannwerkzeuges fixiert, wobei der abzubiegende Randabschnitt 3 auf Höhe der Biegekante 2 aus dem Spannwerkzeug hervorsteht.

Die Biegekante 2 wird dann gezielt mittels eines Linienbrenners 6, der vorzugsweise oszilliert, von einer, oder von beiden Seien der Glasscheibe 1 bis zum Erweichungspunkt des jeweiligen Glases (z. B. > 815° C bei Borosilicatglas) erhitzt. Diese Linienbrenner, die typischerweise mit einem Erdgas/Sauerstoffgemisch betrieben werden, sind in der Glasindustrie bekannt und brauchen daher hier nicht näher erläutert zu werden. Es genügt die symbolische Darstellung im Figurenteil 1C.

Gemäß dem Figurenteil 1 D wird dann unmittelbar nach Wegnahme des Brenners der überstehende Randabschnitt 3 entlang der heißen, niedrig viskosen Biegekante 2 mittels eines symbolisch dargestellten, um eine Achse 7a schwenkbaren Biegewerkzeuges 7 um 90° zu dem abgewinkelten Schenkel 3' des Glasformteiles abgekantet. Die dargestellte Abkantung um 90° ist nur als Ausführungsbeispiel zu sehen. Der Biegewinkel kann natürlich auch von 90° verschieden sein, je nach gewünschtem Glasformteil.

Anstelle eines Biegewerkzeuges zur aktiven Zwangsumformung ist auch eine Umformung durch Schwerkraftsenken möglich.

Da die Temperatur des Glases nach Wegnahme des Brenners sehr schnell, d. h. im Sekundenbereich, entlang der Biegekante unterhalb des Erweichungspunktes absinkt, ist das entstandene, im Figurenteil 1 B dargestellte L-förmige Glasformteil sehr schnell starr.

Der beim Abkanten entstehende Innenradius beträgt 1 mm - 60 mm, vorzugsweise 1 mm -10 mm. Dabei muss nicht zwingend ein fixer Biegeradius vorgesehen sein. Der Biegeradius entlang einer Kante kann auch durch eine entsprechend gestaltete Werkzeugform variabel gestaltet sein.

Das nach dem Biegevorgang unter Spannung stehende Glasformteil wird durch geeignete Kühlung entspannt.

Die Dicke der Glasscheibe kann zwischen 0,1 mm und 30 mm, vorzugsweise 0,5 mm - 10 mm, liegen.

Der vorstehend beschriebene Verformungs-Vorgang kann mit jedem niedrigdehnenden Glas mit α < 9 ppm/K, vorzugsweise α < 5 ppm/K durchgeführt werden, z. B. einem gefloateten Borosilicatglas, das unter der Marke BOROFLOAT^{®} bekannt ist.

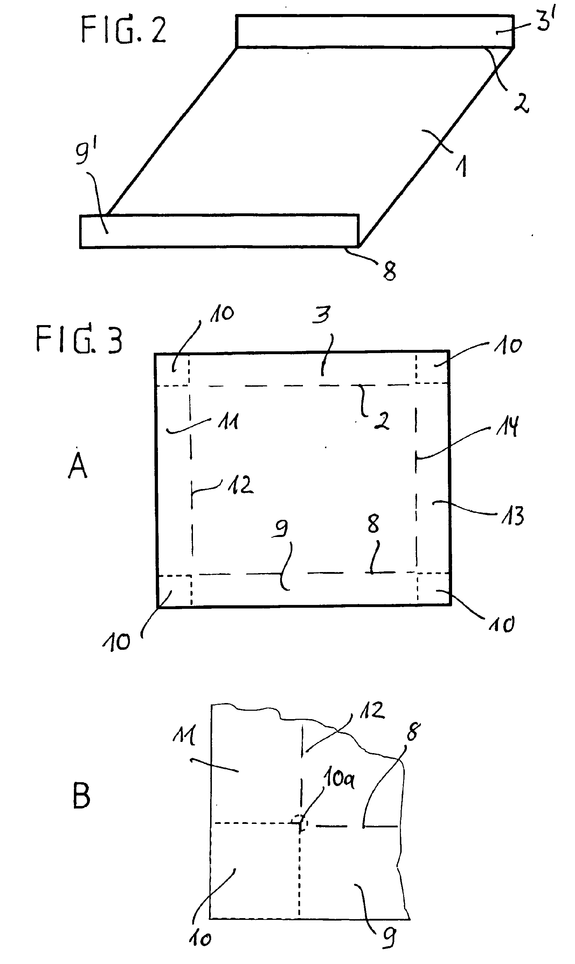

Wird die Glasscheibe nach Fig. 1A zusätzlich mit der beschriebenen Methode an der gegenüberliegenden Kante 8 mit einem Randabschnitt 9 abgewinkelt, entsteht ein U-förmiges Glasformteil gemäß Fig. 2 mit zwei Schenkeln 3' und 9'.

Der beschriebene Vorgang des Abkantens kann an allen vier Seiten der viereckigen Glasscheibe nach Fig. 1 durchgeführt werden.

Wenn direkt benachbarte Randabschnitte zu Schenkeln abgekantet werden, müssen, wie die Fig. 3A zeigt, vor dem Biegeprozess die entsprechenden eingeschlossenen Ecken 10 ausgeschnitten werden.

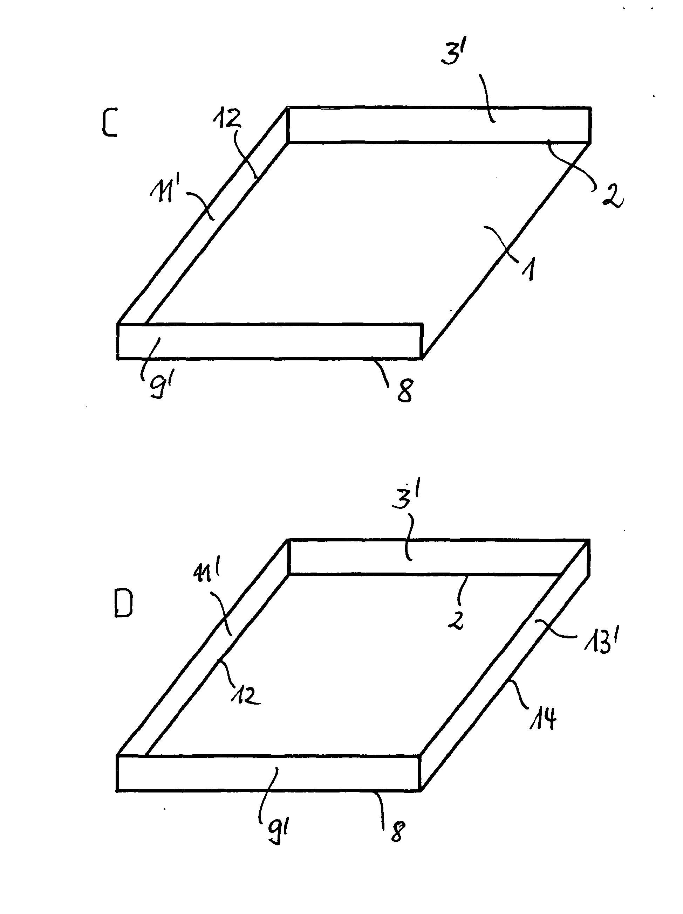

Soll beispielsweise ein 3-seitig abgekantetes Glasformteil nach Fig. 3 C hergestellt werden, sind die beiden linken Ecken 10 in Fig. 3 A herauszuschneiden. Und zusätzlich zu den Randabschnitten 3 und 9 ist der linke Randabschnitt 11 um die Kante 12 zu dem Schenkel 11' abzukanten.

Soll des weiteren ein 4-seitig, d. h. kastenförmig abgekantetes Glasformteil nach Fig. 3D hergestellt werden, sind zusätzlich in Fig. 3 A die beiden rechten Ecken 10 herauszuschneiden sowie der rechte Randabschnitt 13 um die Kante 14 zum Schenkel 13' abzukanten.

Das Ausschneiden der Ecken 10 kann mit üblichen Glastrennmethoden erfolgen, zum Beispiel mit Wasserstrahlschneiden.

Wenn benachbarte Schenkel rechtwinklig abgekantet werden, entstehen offene Eck-Kanten an den Schenkelübergängen. Der entsprechende Spalt wird vorzugsweise durch einen Erdgas/Sauerstoffbetriebenen Punktbrenner, der vorzugsweise oszilliert, aufgeschmolzen und dadurch geschlossen.

Die offenen Kanten können alternativ, nach Kühlung des Glases, auch verklebt werden.

Die Geometrie des Ausschnitts 10 ist derart anzupassen, dass das dem Abkanten nachfolgende Verschmelzen des entstandenen offenen Spaltes zu einer ästhetisch ansprechenden, geschlossenen Oberfläche führt. Um dies zu erreichen wird zweckmäßig, wie in Fig. 10B dargestellt, an der inneren Ecke des Ausschnittes 10 ein kreisförmiges Segment 10 a mit herausgeschnitten.

Entsprechend der in den Figuren dargestellten Verfahrensweise können nicht nur die eingangs erwähnten Vollflächenscheiben, sondern auch die Bauchscheiben hergestellt werden.

Es versteht sich, dass mit der beschriebenen Methode auch Glaskeramikformteile hergestellt werden können, indem die entsprechenden Glasformteile nachträglich keramisiert werden. Auch ist die Erfindung nicht auf die Bereitstellung einer viereckigen Glasscheibe beschränkt. Diese kann z. B auch dreieckig oder sechseckig sein.

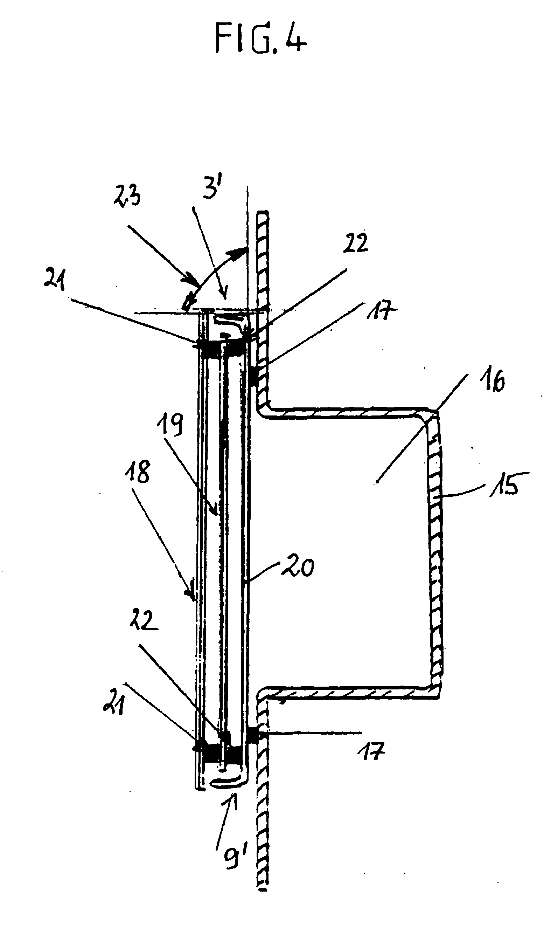

Das so hergestellte Glasformteil wird als Innenscheibe einer Gargerätetür eingesetzt, insbesondere eines Backofentür-Systems, das anhand der Fig. 4 für eine gemäß Fig. 2 U-förmig abgekantete Vollflächenscheibe beschrieben wird. Diese Darstellung gilt analog für die Vollflächenscheiben entsprechend die Figuren 1A, 3C und 3D sowie die entsprechenden Bauchscheiben.

Die Figur 4 zeigt eine Gargerätetür, die eine Beschickungsöffnung einer Gargerätemuffel 15, z. B. einer Backofenmuffel, welche einen Garraum 16 umgrenzt, mittels einer Dichtung 17, welche vorzugsweise umlaufend ausgebildet ist, dichtend abschließt. Die Gargerätetür besteht aus einem Scheibenpaket mit drei Glasscheiben, einer äußeren Scheibe 18, die auch als Frontscheibe bezeichnet wird, einer Zwischenscheibe 19 und einer dem Garraum 16 zugewandten Innenscheibe 20, die entsprechend der Fig. 2 ausgebildet ist. Zwischen den Scheiben des Paketes befinden sich umlaufende Dichtungen 21 und 22, welche die Glasscheiben auch auf Abstand halten.

Die Innenscheibe 20 besitzt sowohl an der oberen, als auch an der unteren Kante (Seite) eine Abkantung 3' bzw. 9' im Winkel 23 von 90°, d. h. besitzt insgesamt eine U-Form. Die Abkantungen erstrecken sich dabei nahezu über den gesamten Bereich zur Frontscheibe 18 hin. Die beiden vertikalen Bereiche sind, wie beim Stand der Technik, durch ein vorzugsweise emailliertes Formblechteil abgedeckt.

Da der obere Bereich der Tür der kritische Bereich hinsichtlich der Reinigungsfreundlichkeit ist und auch die angestrebte, verbesserte Anmutung bestimmt, können bereits mit dieser vereinfachten Ausführung mit der L-förmigen Vollflächen-Innenscheibe 20, die angestrebten Effekte der Reinigungsfreundlichkeit und besserer Anmutung weitgehend erzielt werden.

## Patentansprüche

1. Verfahren zum Herstellen einer Innensscheibe einer Haushalts-Gargerätetür mit mehreckiger plattenförmiger und optional zumindest teilweise ausgebauchter, Grundfläche und mindestens einem entlang einer Kante der Grundfläche abgewinkelten, den Raum zur Frontscheibe der Haushalts-Gargerätetür überbrückenden Schenkel, mit den Schritten:
- Bereitstellen einer mehreckigen ebenen, optional zumindest teilweise ausgebauchten, Glasscheibe aus Borosilikatglas
- Erhitzen der Kante auf mindestens einer Seite der Borosilikat-Glasscheibe mit einem Linienbrenner bis zum Erweichungspunkt des Borosilikatglases
- Abbiegen des über die niedrig viskose Kante hinausstehenden Glasrandes entlang der Biegekante als Schenkel der Innenscheibe bis zu einem vorgegebenen Winkel
- Kühlen der Innenscheibe.

2. Verfahren nach Anspruch 1, bei dem die Biegekante auf beiden Seiten der Glasscheibe erhitzt wird.

3. Verfahren nach Anspruch 1 oder 2, bei dem das Abbiegen durch Zwangsumformen mittels eines Biegewerkzeuges erfolgt.

4. Verfahren nach Anspruch 1 oder 2, bei dem das Abbiegen durch Schwerkraft erfolgt.

5. Verfahren nach einem der Ansprüche 1 bis 4, bei dem eine rechteckige Glasscheibe bereitgestellt wird.

6. Verfahren nach Anspruch 5, bei dem nur eine Seite der Glasscheibe L-förmig abgekantet wird.

7. Verfahren nach Anspruch 5, bei dem zwei gegenüberliegende Seiten der Glasscheibe U-förmig abgekantet werden.

8. Verfahren nach Anspruch 5, bei dem zwei benachbarte oder drei Seiten der Glasscheibe abgekantet werden, nachdem vorher die Eckbereiche der aneinander stoßenden, abzukantenden Randabschnitte der bereitgestellten Glasscheibe herausgeschnitten wurden.

9. Verfahren nach Anspruch 5, bei dem alle vier Seiten der Glasscheibe kastenförmig abgekantet werden, nachdem vorher alle Eckbereiche der aneinander stoßenden, abzukantenden Randabschnitte der bereitgestellten Glasscheibe herausgeschnitten wurden.

10. Verfahren nach Anspruch 8 oder 9, bei dem die aneinander stoßenden Eckkanten der abgewinkelten Randabschnitte miteinander verschmolzen oder verklebt werden.

11. Verfahren nach einem der Ansprüche 1 bis 10, bei dem in einem Winkel abgekantet wird, der größer 0° und kleiner/gleich 90° ist.

12. Verfahren nach einem der Ansprüche 1 bis 11, bei dem eine Glasscheibe aus gefloatetem Borosilicatglas bereitgestellt wird.

13. Verfahren nach einem der Ansprüche 1 bis 12, bei dem eine Glasscheibe bereitgestellt wird, deren Dicke im Bereich zwischen 0,1 mm und 30 mm, vorzugsweise zwischen 0,5 mm und 10 mm liegt.

14. Verfahren nach einem der Ansprüche 1 bis 13, bei dem ein oszillierender Linienbrenner zum Erhitzen der abzubiegenden Kante verwendet wird.

15. Verfahren nach einem der Ansprüche 1 bis 14, bei dem der innere Biegeradius entlang der Biegekante des jeweiligen abgebogenen Schenkels durch Abkanten über eine entsprechend gestaltete Werkzeugform variabel gestaltet wird.

## Claims

1. Method for producing an inside pane of a domestic cooker door comprising a polygonal, plate-shaped and optionally at least partially bulging base and at least one leg which is bent back along an edge of the base and bridges the space to the front pane of the domestic cooker door, comprising the following steps:
- a polygonal flat, optionally at least partially bulging glass pane made of borosilicate glass is provided,
- the edge on at least one side of the borosilicate glass pane is heated to the deformation point of the borosilicate glass using a linear burner,
- the glass rim which protrudes beyond the low-viscosity edge is bent to a predefined angle along the bending edge as a leg of the inside pane, and
- the inside pane is cooled.

2. Method according to Claim 1, wherein the bending edge on both sides of the glass pane is heated.

3. Method according to Claim 1 or 2, wherein the bending process is effected by imposed deformation by means of a bending tool.

4. Method according to Claim 1 or 2, wherein the bending process is effected by gravitational force.

5. Method according to one of Claims 1 to 4, wherein a rectangular glass pane is provided.

6. Method according to Claim 5, wherein only one side of the glass pane is bevelled in the shape of an L.

7. Method according to Claim 5, wherein two opposite sides of the glass pane are bevelled in the shape of a U.

8. Method according to Claim 5, wherein two adjacent or three sides of the glass pane are bevelled once the corner regions of the abutting rim portions of the provided glass pane which are to be bevelled have been cut out beforehand.

9. Method according to Claim 5, wherein all four sides of the glass pane are bevelled in the shape of a box once all the corner regions of the abutting rim portions of the provided glass pane which are to be bevelled have been cut out beforehand.

10. Method according to Claim 8 or 9, wherein the abutting corner edges of the bent-back rim portions are fused or adhesively bonded to one another.

11. Method according to one of Claims 1 to 10, wherein bevelling is carried out at an angle of greater than 0° and less than/equal to 90°.

12. Method according to one of Claims 1 to 11, wherein a glass pane made of floated borosilicate glass is provided.

13. Method according to one of Claims 1 to 12, wherein provision is made of a glass pane having a thickness in the range of between 0.1 mm and 30 mm, preferably of between 0.5 mm and 10 mm.

14. Method according to one of Claims 1 to 13, wherein an oscillating linear burner is used to heat the edge to be bent.

15. Method according to one of Claims 1 to 14, wherein the inner bending radius along the bending edge of the respective bent leg is made variable by bevelling using an appropriately configured mould.

## Revendications

1. Procédé de fabrication d'une vitre intérieure d'une porte d'un appareil de cuisson domestique avec une surface de base polygonale en forme de plaque et en option au moins partiellement bombée et avec au moins une branche coudée le long d'une arête de la surface de base et franchissant l'espace vers la vitre avant de la porte de l'appareil de cuisson domestique, comportant les étapes suivantes :
- préparer une vitre polygonale plane, en option au moins partiellement bombée, en verre de borosilicate,
- chauffage de l'arête sur au moins un côté de la vitre en verre de borosilicate avec un brûleur linéaire jusqu'au point de ramollissement du verre de borosilicate,
- pliage du bord de verre dépassant au-delà de l'arête faiblement visqueuse le long de l'arête de pliage sous la forme d'une branche de la vitre intérieure jusqu'à un angle prédéterminé,
- refroidissement de la vitre intérieure.

2. Procédé selon la revendication 1, dans lequel on chauffe l'arête de pliage sur les deux côtés de la vitre.

3. Procédé selon la revendication 1 ou 2, dans lequel on effectue le pliage par déformation forcée au moyen d'un outil de pliage.

4. Procédé selon la revendication 1 ou 2, dans lequel on effectue le pliage au moyen de la force de gravité.

5. Procédé selon l'une quelconque des revendications 1 à 4, dans lequel on prépare une vitre rectangulaire.

6. Procédé selon la revendication 5, dans lequel on ne plie qu'un côté de la vitre en forme de L.

7. Procédé selon la revendication 5, dans lequel on plie en forme de U deux côtés opposés de la vitre.

8. Procédé selon la revendication 5, dans lequel on plie deux côtés adjacents ou trois côtés de la vitre, après avoir découpé au préalable les zones de coin des parties de bord à plier, butant l'une contre l'autre, dans la vitre préparée.

9. Procédé selon la revendication 5, dans lequel on plie en caisson les quatre côtés de la vitre, après avoir découpé au préalable les zones de coin des parties de bord à plier, butant l'une contre l'autre, dans la vitre préparée.

10. Procédé selon la revendication 8 ou 9, dans lequel on fusionne ou on colle l'une à l'autre les arêtes de coin butant l'une contre l'autre des parties de bord pliées.

11. Procédé selon l'une quelconque des revendications 1 à 10, dans lequel on plie à un angle qui est supérieur à 0° et inférieur/égal à 90°.

12. Procédé selon l'une quelconque des revendications 1 à 11, dans lequel on prépare une vitre à partir de verre de borosilicate flotté.

13. Procédé selon l'une quelconque des revendications 1 à 12, dans lequel on prépare une vitre, dont l'épaisseur se situe entre 0,1 mm et 30 mm, de préférence entre 0,5 mm et 10 mm.

14. Procédé selon l'une quelconque des revendications 1 à 13, dans lequel on utilise un brûleur linéaire oscillant pour chauffer l'arête à plier.

15. Procédé selon l'une quelconque des revendications 1 à 14, dans lequel on réalise un rayon de courbure variable le long de l'arête de pliage de la branche pliée respective par pliage sur un outil de formage de configuration correspondante.
